# FASCICULE DE BREVET EUROPEEN

(11) **EP 0 697 118 B1**
(45) Date de publication et mention de la délivrance du brevet: **10.09.1997**
(21) Numéro de dépôt: 94914445.5
(22) Date de dépôt: 26.04.1994
(51) Int. Cl.: G02B 27/22, G03B 35/00

(54) **DISPOSITIF DE FORMATION D'IMAGE AUTOSTEREOSCOPIQUE**
AUTOSTEREOSKOPISCHES BILDANZEIGEGERÄT
DEVICE FOR FORMING AUTOSTEREOSCOPIC IMAGES

(30) Priorité: 05.05.1993 FR 9305383
(43) Date de publication de la demande: 21.02.1996
(73) Titulaire: ALLIO, Pierre, F-75020 Paris (FR)
(72) Inventeur: ALLIO, Pierre, F-75020 Paris (FR)
(74) Mandataire: Jacquard, Philippe Jean-Luc
(86) Numéro de dépôt international: FR9400471
(87) Numéro de publication internationale: WO9425891

(56) Documents cités:
- EP-A- 0 084 998
- EP-A- 0 305 274
- WO-A-83/03686
- PROCEEDINGS OF THE SOCIETY OF PHOTO-OPTICAL INSTRUMENTATION ENGINEERS, VOL 120: THREE DIMENSIONAL IMAGING, vol.120, 26 Août 1977, SAN DIEGO, CALIFORNIA pages 73 - 91 R.L. DE MONTEBELLO 'WIDE-ANGLE INTEGRAL PHOTOGRAPHY - THE INTEGRAM SYSTEM'
- PATENT ABSTRACTS OF JAPAN vol. 10, no. 116 (P-452) 30 Avril 1986 & JP,A,60 244 943 (SEIZABURU KIMURA)
- PATENT ABSTRACTS OF JAPAN vol. 10, no. 116 (P-452) 30 Avril 1986 & JP,A,60 244 943

## Description

La présente invention a pour objet un dispositif de formation d'images autostéréoscopiques mettant en oeuvre un réseau lenticulaire cylindrique.

Il est connu de la demande de brevet européen EP-84998, un dispositif de formation d'images autostéréoscopiques et orthostéréoscopiques qui comporte d'une part, un premier réseau lenticulaire à lentilles convexes qui forme une image autostéréoscopique et pseudostéréoscopique (c'est-à-dire en "relief inversé"), et d'autre part, un second réseau lenticulaire à lentilles convexes qui forme une image orthostéréoscopique.

Ce dispositif présente l'inconvénient de nécessiter deux réseaux lenticulaires, d'où des contraintes très sévères de tolérances et d'alignement.

Le brevet européen EP 305 274 de la Demanderesse décrit un procédé selon lequel des images élémentaires sont retournées sur elles-mêmes par un procédé électronique par rapport à leur axe ou leur centre de symétrie et recombinées de manière à fournir une image orthostéréoscopique.

Les procédés de l'art antérieur impliquant donc de mettre en oeuvre un système à deux étages pour obtenir une image orthostéréoscopique.

Le problème posé par l'invention est l'obtention directe d'une image autostéréoscopique et orthostéréoscopique.

Dans ce but, l'invention concerne un dispositif de formation d'images autostéréoscopiques mettant en oeuvre un réseau lenticulaire cylindrique, caractérisé en ce qu'il comporte successivement :
- un objectif d'entrée,
- un réseau lenticulaire présentant des lentilles cylindriques élémentaires divergentes, disposé sensiblement dans le plan focal image de l'objectif d'entrée, ledit réseau ayant une distance focale telle que, pour une surface image de largeur égale au pas (p) des lentilles qui le compose, l'image de la pupille d'entrée de l'objectif d'entrée ait une largeur nominale égale audit pas,
- une optique de reprise convergente pour former une image réelle orthostéréoscopique.

Il peut comporter, en aval de la pupille P₁ de l'objectif d'entrée, et en particulier entre celui-ci et le réseau lenticulaire, un élément cylindrique croisé avec le réseau lenticulaire et en compensant au moins partiellement l'astigmatisme. L'élément cylindrique peut être une lentille cylindrique convergente ayant une distance focale apte à compenser au moins partiellement ledit astigmatisme. L'élément cylindrique peut, en variante, être un deuxième réseau lenticulaire divergent dont le plan focal est sensiblement confondu avec celui du premier réseau divergent.

L'invention concerne également un dispositif de formation d'image, caractérisé en ce qu'il comporte un capteur d'images, et en ce que l'optique de reprise renvoie les rayons émergeant du réseau lenticulaire sur le capteur d'images, l'image du réseau lenticulaire dans l'optique de reprise étant telle que le pas des lentilles du réseau lenticulaire y correspond à un nombre entier de points images (pixels) du capteur d'images, et l'image de la pupille de l'objectif d'entrée étant situé sensiblement à la pupille de l'optique de reprise.

Le capteur d'images peut être constitué par un capteur à couplage de charges, en particulier constitué par un ensemble de trois capteurs individuels associés à une optique prismatique de séparation trichrome formant sur les trois capteurs des images nominalement alignées entre elles point image à point image.

Le réseau lenticulaire peut être orienté dans le sens des lignes du capteur d'images. L'objectif d'entrée qui est avantageusement télécentrique peut comporter une lentille d'entrée dont la pupille a un diamètre sensiblement égal à 100 mm. Le réseau lenticulaire peut présenter un pas de 0,4 mm. L'optique de reprise peut avoir un grossissement sensiblement égal à 0,1. Elle peut présenter un diaphragme circulaire, en particulier du type à iris.

L'invention concerne également un système vidéo autostéréoscopique comportant un dispositif de formation d'images tel que défini ci-dessus.

D'autres caractéristiques et avantages apparaîtront mieux à la lecture de la description qui va suivre, donnée à titre d'exemple non limitatif, en liaison avec les dessins qui représentent :
- la figure 1, un dispositif et un système de formation d'image selon l'invention,
- les figures 2a et 2b, un mode de réalisation préféré d'un dispositif selon l'invention.

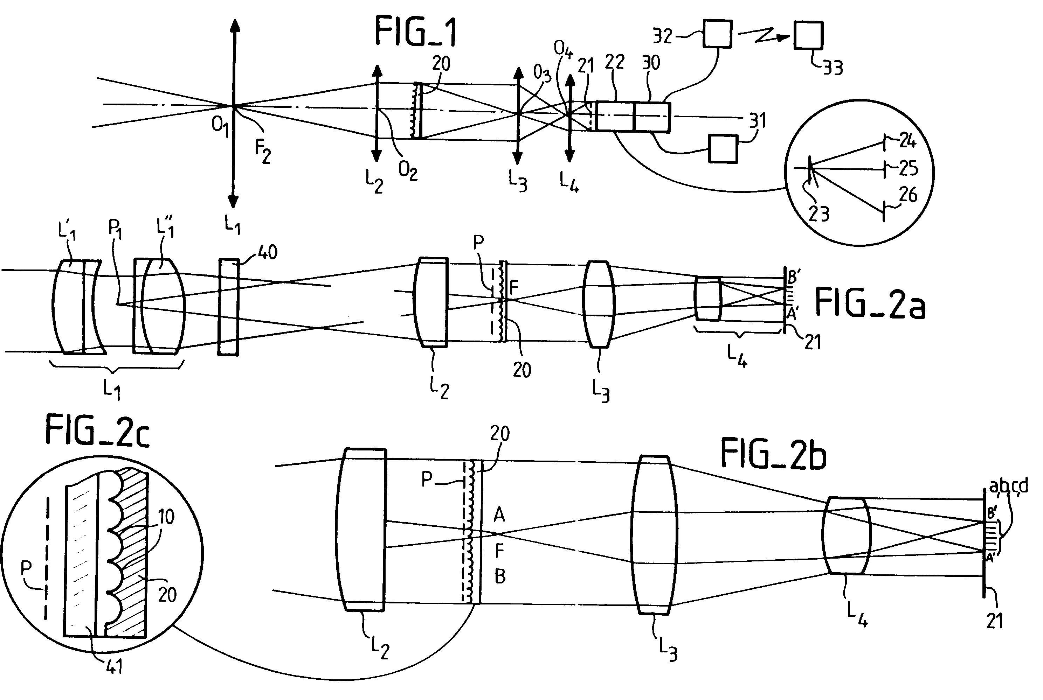

La figure 1 décrit un dispositif de prise de vue selon l'invention. Il se compose des éléments suivants :
1) un objectif d'entrée de préférence télécentrique comportant une lentille d'entrée L₁ et une lentille de sortie L₂ dont, dans le cas d'un télécentrisme, le foyer F₂ est confondu avec le centre optique O₁ de la lentille L₁. Un tel objectif d'entrée est connu en soi de la demande de brevet européen EP-A-0 84998 (CNRS). Lorsque l'optique est télécentrique, l'image du point central de la pupille d'entrée de la lentille L₁ est renvoyée à l'infini par la lentille L₂, d'où un parallélisme permettant d'attaquer favorablement le réseau lenticulaire. En particulier, les deux lentilles L₁ et L₂ peuvent être conjuguées, c'est-à-dire que le foyer F₁ de la lentille L₁ peut être également confondu avec le centre optique O₂ de la lentille L₂. L'objectif L₁ a par exemple une distance focale de 200 mm et une ouverture à f/2, ce qui correspond à un diamètre utile de pupille de 100 mm, cette distance constituant la base stéréoscopique utile pour la prise de vue. Cette valeur, qui est sensiblement supérieure à l'écartement entre les yeux d'un observateur (ou écart inter-pupillaire, de l'ordre de 65 mm), est particulièrement favorable pour donner une perspective stéréoscopique réaliste après projection sur un écran.
2) un réseau lenticulaire, de surface d'environ 70 mm/90 mm composé de lentilles élémentaires divergentes 10, c'est-à-dire concaves, disposées verticalement et ayant un pas p de 0,4 mm. Le réseau lenticulaire est disposé sensiblement au foyer F de l'objectif d'entrée et légèrement en amont de celui-ci (dans le sens de propagation des rayons lumineux). Chacune de ces lentilles élémentaires présente une distance focale telle que, pour une surface image de largeur égale au pas p d'une microlentille, soit 0,4mm de large, l'image de la pupille de l'objectif F₁ formée à travers chacune de ces lentilles élémentaires concaves soit exactement de 0,4mm. Ceci permet que toutes les images virtuelles de pupille formées par chaque lentille élémentaire (ou microlentille) soient exactement jointives entre elles. On notera que le réseau 20 étant composé de lentilles de type cylindrique, les dimensions des images de pupille ne sont bien entendu à considérer que dans le plan horizontal. Le réseau divergent 20 peut être fabriqué par des techniques similaires à celles employées pour les réseaux convergents, par exemple par calandrage d'une plaque en matériau thermoplastique.
3) une optique de reprise de préférence orthoscopique, c'est-à-dire n'induisant pas de déformations de lignes verticales, et pouvant comporter une lentille de champ L₃ positionnée en aval du réseau lenticulaire 20 pour renvoyer l'ensemble des rayons lumineux du réseau 20 vers un objectif L₄ de reprise d'image. L'objectif L₄, par exemple de distance focale de 25 mm, est monté sur une caméra 22 pourvue de capteurs à couplage de charge. Cette optique de reprise L₃, L₄ reprend l'image orthostéréoscopique virtuelle formée par le réseau lenticulaire 20 et forme une image réelle 21 immédiatement en amont des capteurs de la caméra 22. Le grossissement de l'optique de reprise L₃, L₄ est choisi de manière telle que les rayons émergeant du réseau lenticulaire 20 sont renvoyés sur la caméra 22 dans des conditions telles que l'image 21 présente un pas p' correspondant à un nombre entier de points images (pixels) du capteur d'image 22. En outre, la distance entre l'image 21 et le capteur d'image 22, est telle que la mise au point s'effectue sur le ou les capteurs de la caméra 22.

Le réseau lenticulaire 20 n'agit que dans une direction (horizontale). Un objet linéaire d'axe horizontal placé à l'infini donne une image virtuelle dans le plan focal P du réseau 20 situé en amont de celui-ci. Un objet linéaire d'axe vertical placé à l'infini donne une image réelle sensiblement au foyer F de l'objectif d'entrée (L₁, L₂), ce foyer F devant être situé en aval du réseau lenticulaire divergent 20. Il en résulte un astigmatisme qui, en l'espèce, perturbe la mise au point.

Pour le compenser, on peut disposer par exemple en aval de la pupille P₂ de l'objectif d'entrée, de préférence entre L₁ et L₂, une lentille cylindrique convergente 40 de longue focale, dont la génératrice est horizontale (et qui est donc croisée avec le réseau lenticulaire 20 disposé verticalement). Sa distance focale est calculée pour rapprocher et de préférence superposer le point de convergence pour des objets verticaux et le plan focal F du réseau divergent.

Pour des objets horizontaux à l'infini, les rayons lumineux convergent au foyer F et une image virtuelle se forme au plan P. Pour des objets verticaux à l'infini, la lentille cylindrique 41 croisée avec le réseau lenticulaire 20 a pour effet que leur image réelle se forme dans le plan P.

Pour des objets placés à une distance finie donnée, et pour une compensation exacte, le point de convergence est situé en amont du plan focal F.

Une autre solution est de disposer un deuxième réseau lenticulaire 41 divergeant pratiquement dans le même plan que le premier, ayant la même focale que le premier, ou une focale calculée de sorte que les deux plans focaux se confondent, et dont le pas correspond à un pixel (sur le 1/4 du pas du premier réseau pour des pixels carrés et quatre points de vue). Les paramètres de pupille sont alors fixés.

D'une manière générale, le grossissement de l'optique de reprise est choisi en fonction de la taille de l'image réelle que l'on désire obtenir. Cette image réelle est orthostéréoscopique en raison du fait que l'image virtuelle produite par les lentilles élémentaires divergentes 10 ne présente pas l'inversion produite par les lentilles convergentes de l'art antérieur.

Les éléments de l'objectif d'entrée et de l'optique de reprise sont disposées de manière telle que l'image de la pupille de l'objectif d'entrée coïncide sensiblement avec la pupille de l'optique de reprise. Cette condition assure en particulier que, dans le cas où l'objectif d'entrée n'est pas télécentrique, l'optique de reprise assure un rattrapage de parallélisme ainsi qu'il sera précisé par la suite.

En particulier, le capteur 22 peut comporter trois capteurs à couplage de charge 24, 25 et 26 montés sur un ensemble prismatique 23 de séparation trichrome, lesquels sont parfaitement alignés de telle sorte que le premier pixel de la première ligne coïncide pour chaque capteur, et de manière générale, que les images des trois capteurs 24, 25 et 26 se trouvent de la sorte alignées pixel à pixel.

Les signaux visés du capteur 22 intégré dans une caméra 30 peuvent être envoyés sur un moniteur de télévision 31 équipé pour visualiser des images stéréoscopiques, ou bien encore être transmis par un émetteur 32 pour être reçu par un récepteur 33.

### Exemple

Réseau lenticulaire 20 au pas de 0,4 mm et de 1,66 mm de distance focale disposé à 20 mm du centre optique de L₂ et à 90 mm du centre optique de L₃. La lentille L₁ est constituée par un doublet L'₁, L'₂. Sa pupille est notée P₁.

| | | |
|---|---|---|
| L1 | Distance focale | f1 = 200 mm |
| L2 | Distance focale | f2 = 300 mm |
| L3 | Distance focale | f3 = 230 mm |
| L4 | Distance focale | f4 = 25 mm |

- distance 0₁0₂ entre les centres optiques des lentilles L₁ et L₂ 0₁0₂ = 180 mm
- distance 0₂0₃ entre les centres optiques des lentilles L₂ et L₃ 0₂0₃ = 110 mm
- distance 0₃0₄ entre les centres optiques des lentilles L₃ et L₄ 0₃0₄ = 245 mm.

Le dispositif est également avantageux pour les raisons suivantes.

Pour réaliser un ensemble de prise de vue à trois dimensions, il faut en effet que le système permette d'observer une scène sous différents points de vue dont le nombre est supérieur ou égal à 2, et que chaque point de vue soit suffisamment distant du précédent pour qu'il y ait une différence (ou disparité) notable entre les vues. Lorsque la prise de vue se fait avec un seul objectif, sans mouvement de ces éléments constitutifs dans le plan parallèle au plan image, la totalité du déplacement relatif des axes de prise de vue doit être contenue dans le diamètre horizontal de la pupille de l'objectif qui constitue la base stéréoscopique totale disponible. Dans le cas décrit ci-dessus, la base stéréoscopique totale, ou diamètre horizontal utile de la pupille est égale à 100 mm, soit supérieure à l'écart interpupillaire d'un être humain adulte (environ 65 mm). En vue de l'obtention d'une base stéréoscopique de 10 cm avec un objectif ne présentant pas de défaut notable, et pour que la perspective de la scène filmée ne soit pas différente de celle perçue par un observateur, il a été évalué de manière expérimentale qu'un rapport de l'ordre de 2 entre la distance focale et le diamètre horizontal utile de la pupille donnait les résultats recherchés. Ceci a conduit à utiliser dans l'exemple précité un objectif ayant une lentille L₁ de distance focale de 200 mm ouvert à f/2.

La distance focale n'est pas à considérer en tant que telle, car il doit être tenu compte du dimensions de la surface sensible utilisée. Pour une caméra tri-CCD standard munie de capteurs formant une cible de 8,8 mm x 6,6 mm environ, cette distance focale détermine un champ objet très étroit, en fait, plus petit que le dizième du champ (160 mm environ) fourni par la focale "standard" pour une telle surface (soit 16 mm environ). La solution à ce problème qui est de concilier une base stéréoscopique convenable et une focale standard est de séparer ces deux exigences incompatibles en utilisant un premier plan image intermédiaire de surface, par exemple dix fois supérieure. Cette surface est matérialisée par un réseau lenticulaire d'une surface utile de 80 mm x 60 mm. Cette image est reprise par un second objectif de courte focale, par exemple 25 mm, monté sur la caméra afin de faire coïncider l'image formée du réseau avec les capteurs à couplage de charges CCD. La base stéréoscopique ayant jouée son rôle lors de la formation de l'image sur le réseau lenticulaire cylindrique vertical, il devient possible de réduire l'image par reprise aérienne en conservant l'angle de champ objet.

Plus particulièrement, la mise en oeuvre à la fois de l'objectif, de préférence télécentrique, L₁, L₂ et du dispositif de reprise L₃, L₄ permet de réaliser une réduction de dimensions, de l'ordre de 10 dans l'exemple précité, la surface utile au premier plan image étant de l'ordre de 60mm x 80mm. Le réseau lenticulaire 20 étant disposé sensiblement au premier plan image de l'optique L₁, L₂, ceci permet de conserver le bénéfice de la base stéréoscopique de 10 cm malgré la réduction du format de l'image sur le capteur 22. En effet, l'utilisation d'une surface initiale de 60mm x 80mm permet de conjuguer à la fois le champ qui est un peu supérieur à la distance focale standard pour ce format (160 mm) et la large base stéréoscopique égale à 10 cm. Le signal sortant du capteur 22 est directement exploitable du fait que l'image formée sur le capteur est orthostéréoscopique.

Le dispositif de prise de vue selon l'invention permet d'une part de n'utiliser qu'un seul réseau 20 pour les trois couleurs, et d'autre part ce réseau est de grandes dimensions, ce qui permet à la fois de le fabriquer et de le positionner plus facilement avec la précision souhaitée. On évite ainsi les inconvénients à la fois de la figure 1 (réseau de faibles dimensions difficile à positionner dans le capteur, ce qui de toute façon n'évite pas les distorsions géométriques intrinsèques à cette géométrie), et de la figure 2 (grand nombre de réseaux lenticulaires dont l'alignement est pratiquement impossible à conserver en dehors de conditions expérimentales très strictes).

Selon un mode de réalisation préféré correspondant au cas d'une correction mettant en oeuvre une lentille cylindrique 40, le deuxième objectif L₃, L₄ de reprise d'image présente un diaphragme à iris. Un tel diaphragme est équivalent à un diaphragme en forme de fente horizontale dans le premier objectif L₁, L₂, mais il est plus facile de le positionner puisque le seul paramètre est son centrage. Le diaphragme à iris centré du second objectif est équivalent à un diaphragme en forme de fente horizontale dans le premier objectif. En effet, le réseau utilisé étant de type cylindrique vertical, les rayons lumineux émergeants de la première pupille ne sont pas perturbés dans le sens parallèle à l'axe des micro-lentilles, alors que dans le sens horizontal, ces rayons sont définitivement liés aux images de la pupille obtenue par chaque micro-lentille. Les images de la pupille ne peuvent pas être affectées par la diminution de la taille de la pupille du second objectif. Dans le cas où la correction s'effectue par le deuxième réseau lenticulaire 41 croisé avec le premier, ce deuxième diaphragme ne joue le rôle que pour la quantité de la lumière reçue, la pupille d'entrée étant déterminée entièrement par les deux réseaux.

La discrétisation des capteurs 24, 25, 26 de la caméra permet de ne pas avoir à diviser la pupille en autant de sous-pupilles qui seraient en nombre égal au nombre de points de vue choisis. En effet, lors de la reprise d'image, l'image du réseau 20 est calée de telle sorte que chaque image de chaque lentille (ou micro-image de la pupille) se forme sur un nombre entier de points image (ou pixels) égal au nombre de points de vue. La discrétisation de la surface sensible des capteurs CCD induit par retour inverse des chemins lumineux une discrétisation de la première pupille du système. Le fait que les micro-images de la pupille N°1 qui se forment à l'endroit du réseau lenticulaire (et cela à la manière d'un continuum) se trouvent projetées sur une structure discrète du point de vue spatial, mais aussi énergétique, permet de diviser la pupille en autant de zones géographiques distinctes égales en nombre et en disposition relative aux pixels mis en correspondance exacte avec des lentilles du réseau. Dans l'exemple précité, chaque image de micro-lentille se forme horizontalement, sur quatre pixels, ce qui découpe la pupille principale en quatre zones égales séparées par des parties rendues aveugles parce qu'elles correspondent aux espaces inter-pixels des capteurs CCD. La structure horizontale de la surface sensible choisie détermine la structure résultante de la pupille utile à la prise de vue en relief et détermine par conséquent les moyens de traitement de l'image ainsi obtenue. Le fait d'utiliser quatre pixels par micro-lentille conduit à filmer quatre points de vue simultanément (un point de vue par sous-pupille). Le traitement électronique de l'image devient possible parce que le traitement est réalisé sur la plus petite entité de l'image composite obtenue : le pixel, d'où, une excellente séparation entre les points de vue.

Une séparation stéréoscopique encore meilleure peut être obtenue en disposant la direction des lignes du capteur 22 parallèlement à l'axe des lentilles du réseau lenticulaire 20. En effet, la séparation entre les points image voisins appartenant à des lignes différentes est supérieure à celle entre des points image voisins appartenant à une même ligne. Ceci correspond à un positionnement à 90° par rapport aux conditions habituelles (balayage ligne vertical) mais ceci peut être, si on le souhaite, rétabli par un traitement électronique approprié.

## Revendications

1. Dispositif de formation d'images autostéréoscopiques mettant en oeuvre un réseau lenticulaire cylindrique, caractérisé en ce qu'il comporte successivement :
- un objectif d'entrée (L1, L2),
- un réseau lenticulaire (20) présentant du lentilles cylindriques élémentaires divergentes, disposé sensiblement dans le plan focal image de l'objectif d'entrée, ledit réseau ayant une distance focale telle que, pour une surface image de largeur égale au pas (p) des lentilles qui le compose, l'image de la pupille d'entrée de l'objectif d'entrée (L1, L2) ait une largeur nominale égale audit pas,
- une optique de reprise (L3, L4) convergente pour former une image réelle orthostéréoscopique.

2. Dispositif selon la revendication 1, caractérisé en ce qu'il comporte, en aval de l'objectif d'entrée (L1, L2) un élément cylindrique croisé avec le réseau lenticulaire et en compensant au moins partiellement l'astigmatisme.

3. Dispositif selon la revendication 2, caractérisé en ce que l'élément cylindrique est une lentille cylindrique convergente ayant une distance focale apte à compenser au moins partiellement ledit astigmatisme.

4. Dispositif selon la revendication 2, caractérisé en ce que l'élément cylindrique est un deuxième réseau lenticulaire divergent dont le plan focal est sensiblement confondu avec celui du premier réseau divergent.

5. Dispositif de formation d'image selon une du revendications précédentes, caractérisé en ce qu'il comporte un capteur d'images (22), et en ce que l'optique de reprise (L3, L4) renvoie les rayons émergeant du réseau lenticulaire (20) sur le capteur d'images (22), l'image (21) du réseau lenticulaire (20) dans l'optique de reprise (L3, L4) étant telle que le pas (p) des lentilles du réseau lenticulaire (20) y correspond à un nombre entier de points images (pixels) du capteur d'images (22), et l'image de la pupille de l'objectif d'entrée étant située sensiblement à la pupille de l'optique de reprise.

6. Dispositif selon la revendication 5, caractérisé en ce que le capteur d'images est un capteur à couplage de charges constitué par un ensemble de trois capteurs individuels (24, 25, 26) associés à une optique prismatique (23) de séparation trichrome formant sur les trois capteurs (24, 25, 26) des images nominalement alignées entre elles point image à point image.

7. Dispositif selon une des revendications précédentes, caractérisé en ce que le réseau lenticulaire (20) est orienté dans le sens des lignes du capteur d'images (22).

8. Dispositif selon une des revendications précédentes, caractérisé en ce que l'objectif d'entrée (L1, L2) comporte une lentille d'entrée (L1) dont la pupille a un diamètre sensiblement égal à 100 mm.

9. Dispositif selon une des revendications précédentes, caractérisé en ce que l'optique de reprise (L3, L4) a un grossissement sensiblement égal à 0,1.

10. Dispositif selon une des revendications précédentes, caractérisé en ce que l'optique de reprise (L3, L4) présente un diaphragme circulaire, en particulier du type à iris.

11. Dispositif selon une des revendications précédentes, caractérisé en ce que l'objectif d'entrée (L₁, L₂) est télécentrique.

12. Dispositif selon une des revendications précédentes, caractérisé en ce que l'optique de reprise comporte une lentille de champ (L₃) positionnée en aval du réseau lenticulaire (20) pour renvoyer les rayons lumineux issus du réseau lenticulaire (20) vers un objectif (L₄) de reprise d'image.

13. Système vidéo autostéréoscopique caractérisé en ce qu'il comporte un dispositif de formation d'images selon une des revendications précédentes.

## Patentansprüche

1. Vorrichtung zur Erzeugung von autostereoskopischen Bildern, die ein zylindrisches Linsenraster verwendet und die dadurch gekennzeichnet ist, daß sie folgendes aufweist:
ein Eintrittsobjektiv (L1, L2),
ein Linsenraster (20), welches von zylindrischen elementaren divergierenden Linsen gebildet wird, und das im wesentlichen in der Bild-Brennebene des Eintrittsobjektivs angeordnet ist, wobei das Raster eine Brennweite aufweist, daß bei einer Bildebene von gleicher Größe wie eine Teilung (p) der Linsen, welche es bilden, das Bild von einer Eintrittspupille des Eintrittsobjektivs (L1, L2) eine nominelle Größe aufweist, die gleich der Teilung ist,
eine Zurückführoptik (L3, L4), welche konvergiert, um eine reelle orthostereoskopische Abbildung zu erzeugen.

2. Vorrichtung nach Anspruch 1, dadurch gekennzeichnet, daß sie strahlabwärts des Eintrittsobjektivs (L1, L2) ein zylindrisches Element aufweist, welches zusammen mit dem Linsenraster gekreuzt bzw. quer angeordnet ist, und dadurch zumindest teilweise dessen Astigmatismus ausgleicht.

3. Vorrichtung nach Anspruch 2, dadurch gekennzeichnet, daß das zylindrische Element eine zylindrische Sammellinse ist, welche eine Brennweite aufweist, die geeignet ist, um zumindest teilweise den Astigmatismus auszugleichen.

4. Vorrichtung nach Anspruch 2, dadurch gekennzeichnet, daß das zylindrische Element ein zweites divergierendes Linsenraster ist, dessen Brennebene im wesentlichen mit dem des ersten divergierenden Rasters zusammenfällt.

5. Vorrichtung zur Erzeugung einer Abbildung nach einem der vorhergehenden Ansprüche, dadurch gekennzeichnet, daß sie einen Bildaufnehmer (22) aufweist, und daß die Zurückführoptik (L3, L4) die Strahlen, welche aus dem Linsenraster (20) austreten, auf den Bildaufnehmer (22) zurückstrahlt, wobei das Bild (21) des Linsenrasters (20) derart in der Zurückführoptik (L3, L4) ist, daß die Teilung (p) der Linsen des Linsenrasters (20) dort mit einer vollständigen Anzahl von Bildpunkten (pixels) des Bildaufnehmers (22) übereinstimmt, und das Bild der Pupille des Eintrittsobjektivs im wesentlichen an der Pupille der Zurückführoptik liegt.

6. Vorrichtung gemäß Anspruch 5, dadurch gekennzeichnet, daß der Bildaufnehmer ein ladungsgekoppelter Aufnehmer ist, welcher durch eine Zusammenstellung von drei individuellen Aufnehmern (24, 25, 26) gebildet wird, welche mit einer Prisma-Optik (23) zur trichromatischen Separation zusammenhängen, die auf den drei Aufnehmern (24, 25, 26) Bilder erzeugt, welche zueinander Bildpunkt für Bildpunkt nominell ausgerichtet sind.

7. Vorrichtung nach einem der vorhergehenden Ansprüche, dadurch gekennzeichnet, daß das Linsenraster (20) in Richtung der Linie des Bildaufnehmers (22) ausgerichtet ist.

8. Vorrichtung nach einem der vorhergehenden Ansprüche, dadurch gekennzeichnet, daß das Eintrittsobjektiv (L1, L2) eine Eintrittslinse (L1) aufweist, deren Pupille im wesentlichen einen Durchmesser von 100 mm aufweist.

9. Vorrichtung nach einem der vorhergehenden Ansprüche, dadurch gekennzeichnet, daß die Zurückführoptik (L3, L4) im wesentlichen eine Vergrößerung von 0,1 aufweist.

10. Vorrichtung nach einem der vorhergehenden Ansprüche, dadurch gekennzeichnet, daß die Zurückführoptik (L3, L4) eine Kreisblende darstellt, insbesondere von der Art einer Irisblende.

11. Vorrichtung nach einem der vorhergehenden Ansprüche, dadurch gekennzeichnet, daß das Eintrittsobjektiv (L1, L2) telezentrisch ist.

12. Vorrichtung nach einem der vorhergehenden Ansprüche, dadurch gekennzeichnet, daß die Zurückführoptik eine Feldlinse (L3) aufweist, welche strahlabwärts des Linsenrasters (20) angeordnet ist, um die Lichtstrahlen, welche aus dem Linsenraster 20 stammen, auf ein Bildzurückführobjektiv (L4) zurückzuschicken.

13. Autostereoskopisches Videosystem, dadurch gekennzeichnet, daß es eine Vorrichtung zur Erzeugung von Bildern gemäß einem der vorhergehenden Ansprüche aufweist.

## Claims

1. A device for forming autostereoscopic images by implementing a cylindrical lens array, the device being characterized in that it comprises in succession:
• an entrance objective (L1, L2);
• a lens array (20) having diverging elementary cylindrical lenses disposed substantially in the image focal plane of the entrance objective, said array having a focal length such that for an image area of width equal to the pitch (p) of the lenses making it up, the image of the entrance pupil of the entrance objective (L1, L2) has a nominal width equal to said pitch; and
• a converging transfer optical system (L3, L4) for forming an orthostereoscopic real image.

2. A device according to claim 1, characterized in that it includes, downstream from the entrance objective (L1, L2) a cylindrical element that is crossed relative to the lens array and that compensates astigmatism thereof, at least in part.

3. A device according to claim 2, characterized in that the cylindrical element is a converging cylindrical lens having a focal length suitable for compensating said astigmatism, at least in part.

4. A device according to claim 2, characterized in that the cylindrical element is a second diverging lens array whose focal plane substantially coincides with that of the first diverging array.

5. An image-forming device according to any preceding claim, characterized in that it comprises an image sensor (22) and in that the transfer optical system (L3, L4) projects the rays emerging from the lens array (20) onto the image sensor (22), the image (21) of the lens array (20) in the transfer optical system (L3, L4) being such that the pitch (p) of the lenses of the lens array (20) corresponds therein to an integer number of image points (pixels) of the image sensor (22), and the image of the pupil of the entrance objective is situated substantially at the pupil of the transfer optical system.

6. A device according to claim 5, characterized in that the image sensor is a charge-coupled sensor constituted by a set of three individual sensors (24, 25, 26) associated with a prismatic three-color beam-splitter (23) forming images on the three sensors (24, 25, 26) that are nominally in mutual alignment, image point by image point.

7. A device according to any preceding claim, characterized in that the lens array (20) is oriented in the line direction of the image sensor (22).

8. A device according to any preceding claim, characterized in that the entrance objective (L1, L2) comprises an entrance lens (L1) whose pupil has a diameter substantially equal to 100 mm.

9. A device according to any preceding claim, characterized in that the transfer optical system (L3, L4) has a magnification substantially equal to 0.1.

10. A device according to any preceding claim, characterized in that the transfer optical system (L3, L4) has a circular diaphragm, in particular of the iris type.

11. A device according to any preceding claim, characterized in that the entrance objective (L₁, L₂) is telecentric.

12. A device according to any preceding claim, characterized in that the transfer optical system comprises a field lens (L₃) positioned downstream from the lens array (20) to project the light rays coming from the lens array (20) towards an image transfer objective (L₄).

13. An autostereoscopic video system, characterized in that it includes an image-forming device according to any preceding claim.
